# EUROPEAN PATENT APPLICATION

(11) **EP 3 419 342 A1**
(43) Date of publication of application: **26.12.2018**
(21) Application number: 17753068.0
(22) Date of filing: 09.02.2017
(51) Int. Cl.: H04W 48/18, H04W 24/02, H04W 92/24

(54) **TRANSMISSION DEVICE SELECTION METHOD, GATEWAY SELECTION METHOD, AND COMMUNICATION SYSTEM**

(30) Priority: 17.02.2016 JP 2016028244; 04.04.2016 JP 2016075032; 16.05.2016 JP 2016098295; 07.10.2016 JP 2016199323
(71) Applicant: NTT DOCOMO, INC., Chiyoda-ku Tokyo 100-6150 (JP)
(72) Inventor: SHIMOJOU Takuya, Tokyo 100-6150 (JP); SHIMIZU Masayoshi, Tokyo 100-6150 (JP); FUJISHIMA Daisuke, Tokyo 100-6150 (JP); SHIBAHARA Tomoki, Tokyo 100-6150 (JP); THAKOLSRI Srisakul, Munich 80687 (DE); SAMA Malla Reddy, Munich 80687 (DE); KIESS Wolfgang, Munich 80687 (DE)
(74) Representative: Viering, Jentschura & Partner mbB Patent- und Rechtsanwälte
(86) International application number: PCT/JP2017/004723
(87) International publication number: WO 2017/141810

(57) **Abstract**

In a communication system (1) according to this embodiment, an MME (30) selects an SGW-C (60) transmitting and receiving control signals using a control plane that is a route for transmitting the control signals for the communication service used by a UE (10), from among a plurality of gateways, on the basis of a required condition of the communication service used by the UE (10). In addition, the selected SGW-C (60) selects an SGW-U (70) transmitting and receiving user signals using a user plane that is a route for transmitting the user signals for the communication service, on the basis of the required condition of the communication service used by the UE (10).

## Description

### Technical Field

The present invention relates to a transmission device selection method, a gateway selection method, and a communication system.

### Background Art

Conventionally, it is described in Non-Patent Literature 1 that a mobility management entity (MME) is selected on the basis of a terminal type of a user equipment (UE) that has sent Attach Request, and the selected MME selects a serving gateway (SGW) on the basis of load information.

### Citation List

### Non Patent Literature

[Non-Patent Literature 1] 3GPP TS 23.401

### Summary of Invention

### Technical Problem

However, according to the conventional technology described above, there exists only means for selecting an SGW on the basis of resources that can be allocated for each SGW. Accordingly, there is a problem that there is a possibility that one UE may not be able to be connected to a plurality of communication control devices that are appropriate for required communication service conditions for each communication service. Particularly, in a case where SGWs using a control plane and a user plane are separately selected, it is preferable to select an SGW that is appropriate for each required communication service condition.

Thus, in order to solve the problem described above, an object of the present invention is to provide a transmission device selection method, a gateway selection method, and a communication system capable of dynamically selecting a gateway for each plane in accordance with a plurality of communication services requested by one UE.

### Solution to Problem

In order to solve the problems described above, according to one embodiment of the present invention, there is provided a transmission device selection method for selecting a control signal transmitting device and a user signal transmitting device in a communication system including: a communication control device; a plurality of control signal transmitting devices transmitting and receiving control signals using a control plane that is a route for transmitting the control signals used for a communication service used by a terminal; and a plurality of user signal transmitting devices transmitting and receiving user signals used for the communication service using a user plane that is a route for transmitting the user signals. The transmission device selection method includes a transmission device selection step of selecting a control signal transmitting device and a user signal transmitting device on the basis of the communication service used by the terminal.

In addition, according to one embodiment of the present invention, there is provided a communication system including: a communication control device; a plurality of control signal transmitting devices transmitting and receiving control signals using a control plane that is a route for transmitting the control signals used for a communication service used by a terminal; and a plurality of user signal transmitting devices transmitting and receiving user signals using a user plane that is a route for transmitting the user signals used for the communication service. The communication control device includes a transmission device selection unit for selecting a control signal transmitting device and a user signal transmitting device on the basis of the communication service used by the terminal.

According to the present invention, a control signal transmitting device and a user signal transmitting device are selected on the basis of the communication service used by the terminal, and accordingly, a control signal transmitting device and a user signal transmitting device can be dynamically selected in accordance with the communication service for each plane.

In addition, according to one embodiment of the present invention, there is provided a transmission device selection method for selecting a control signal transmitting device and a user signal transmitting device in a communication system including: a communication control device; a plurality of control signal transmitting devices transmitting and receiving control signals using a control plane that is a route for transmitting the control signals used for a communication service used by a terminal; and a plurality of user signal transmitting devices transmitting and receiving user signals using a user plane that is a route for transmitting the user signals used for the communication service. The transmission device selection method includes: a control signal transmitting device selection step of selecting, by the communication control device, a control signal transmitting device on the basis of the communication service used by the terminal; and a user signal transmitting device selection step of selecting, on the basis of the communication service used by the terminal, a user signal transmitting device using the control signal transmitting device selected in the control signal transmitting device selection step.

In addition, according to one embodiment of the present invention, there is provided a communication system including: a communication control device; a plurality of control signal transmitting devices transmitting and receiving control signals using a control plane that is a route for transmitting the control signals used for a communication service used by a terminal; and a plurality of user signal transmitting devices transmitting and receiving user signals using a user plane that is a route for transmitting the user signals used for the communication service. The communication control device includes a control signal transmitting device selection unit for selecting a control signal transmitting device from among a plurality of the control signal transmitting devices on the basis of the communication service used by the terminal, and a control signal transmitting device includes a user signal transmitting device selection unit for selecting a user signal transmitting device, on the basis of the communication service used by the terminal, from among the plurality of control signal transmitting devices other than the control signal transmitting device of its own self, in a case in which the control signal transmitting device of its own self is selected by the control signal transmitting device selection unit.

According to the present invention, a control signal transmitting device is selected on the basis of the communication service used by the terminal, and a user signal transmitting device is further selected on the basis of the service, and accordingly, a control signal transmitting device and a user signal transmitting device can be dynamically selected in accordance with the communication service for each plane.

In order to solve the problems described above, according to one embodiment of the present invention, there is provided a gateway selection method including: a first gateway selection step of selecting, by the communication control device, a first serving gateway transmitting and receiving control signals using a control plane that is a route for transmitting the control signals used for a communication service used by a terminal, on the basis of the communication service used by the terminal; and a second gateway selection step of selecting, on the basis of the communication service used by the terminal, a second serving gateway transmitting and receiving user signals using a user plane that is a route for transmitting the user signals used for the communication service, by the first serving gateway selected in the first gateway selection step.

In addition, according to one embodiment of the present invention, there is provided a communication system including: a communication control device; and a plurality of gateways. The communication control device includes a first gateway selection unit for selecting a first serving gateway transmitting and receiving control signals using a control plane that is a route for transmitting the control signals used for a communication service used by a terminal, from among the plurality of gateways, on the basis of the communication service used by the terminal, and a gateway includes a second gateway selection unit for selecting a second serving gateway transmitting and receiving user signals using a user plane that is a route for transmitting the user signals used for the communication service, from among the plurality of gateways other than the gateway of its own self, on the basis of the communication service used by the terminal, in a case in which the gateway of its own self is selected as the first serving gateway by the first gateway selection unit.

According to the present invention, a first serving gateway is selected on the basis of the communication service used by the terminal, and a second serving gateway is further selected on the basis of the service, and accordingly, a gateway can be dynamically selected in accordance with the communication service for each plane.

In addition, in the gateway selection method according to one embodiment of the present invention, in the first gateway selection step, the communication control device may select the first serving gateway on the basis of information associating the communication service used by the terminal and the first serving gateway that is appropriate for the communication service with each other, and, in the second gateway selection step, the selected first serving gateway may select the second serving gateway on the basis of information associating the communication service used by the terminal and the second serving gateway that is appropriate for the communication service with each other. In such a case, the first serving gateway is selected on the basis of the information associating the communication service and the first serving gateway that is appropriate for the communication service with each other, the first serving gateway is selected on the basis of the information associating the communication service and the first serving gateway that is appropriate for the communication service with each other, the second serving gateway is selected on the basis of the information associating the communication service and the second serving gateway that is appropriate for the communication service with each other, and the second serving gateway is selected on the basis of the information associating the communication service and the second serving gateway that is appropriate for the communication service with each other, whereby serving gateways appropriate for the communication service can be selected.

In addition, the communication control device selection method according to one embodiment of the present invention may further include: a first packet data network gateway selection step of selecting, by the communication control device, a first packet data network gateway connected to the first serving gateway selected in the first gateway selection step and transmitting/receiving control signals to/from the first serving gateway, on the basis of the communication service used by the terminal; and a second packet data network gateway selection step of selecting, on the basis of the communication service used by the terminal, a second packet data network gateway connected to the first packet data network gateway selected in the first packet data network gateway selection step and transmitting/receiving the user signals, by the first packet data network gateway selected in the first packet data network gateway selection step.

In such a case, the first packet data network gateway is selected on the basis of the communication service used by the terminal, and the second packet data network gateway is further selected on the basis of the service, and accordingly, the gateway can be dynamically selected in accordance with the communication service for each plane.

According to one embodiment of the present invention, there is provided a transmission device selection method for selecting a control signal transmitting device and a user signal transmitting device in a communication system including: a communication control device; a plurality of control signal transmitting devices transmitting and receiving control signals using a control plane that is a route for transmitting the control signals used for a communication service used by a terminal; and a plurality of user signal transmitting devices transmitting and receiving user signals using a user plane that is a route for transmitting the user signals used for the communication service. The transmission device selection method includes: a control signal transmitting device selection step of selecting, by the communication control device, a control signal transmitting device on the basis of a required condition of the communication service used by the terminal; and a user signal transmitting device selection step of selecting, on the basis of the required condition of the communication service used by the terminal, a user signal transmitting device, by the control signal transmitting device selected in the control signal transmitting device selection step.

In addition, according to one embodiment of the present invention, there is provided a communication system including: a communication control device; a plurality of control signal transmitting devices transmitting and receiving control signals using a control plane that is a route for transmitting the control signals used for a communication service used by a terminal; and a plurality of user signal transmitting devices transmitting and receiving user signals using a user plane that is a route for transmitting the user signals used for the communication service. The communication control device includes a control signal transmitting device selection unit for selecting a control signal transmitting device from among the plurality of control signal transmitting devices on the basis of a required condition of the communication service used by the terminal, and the control signal transmitting device includes a user signal transmitting device selection unit for selecting a user signal transmitting device from among the plurality of control signal transmitting devices other than the control signal transmitting device of its own self, on the basis of the required condition of the communication service used by the terminal, in a case in which the control signal transmitting device of its own self is selected by the control signal transmitting device selection unit.

According to the present invention, a control signal transmitting device is selected on the basis of the required condition of the communication service used by the terminal, and a user signal transmitting device is further selected on the basis of the required condition of the service, and accordingly, a control signal transmitting device and a user signal transmitting device can be dynamically selected in accordance with the required condition of the communication service for each plane.

In addition, according to one embodiment of the present invention, there is provided a gateway selection method for selecting a gateway in a communication system including a communication control device and a plurality of gateways. The gateway selection method includes: a first gateway selection step of selecting, by the communication control device, a first serving gateway transmitting and receiving control signals using a control plane that is a route for transmitting the control signals used for a communication service used by a terminal, on the basis of a required condition of the communication service used by the terminal; and a second gateway selection step of selecting, on the basis of the required condition of the communication service used by the terminal, a second serving gateway transmitting and receiving user signals using a user plane that is a route for transmitting the user signals used for the communication service, by the first serving gateway selected in the first gateway selection step.

In addition, according to one embodiment of the present invention, there is provided a communication system including: a communication control device; and a plurality of gateways. The communication control device includes a first gateway selection unit for selecting a first serving gateway transmitting and receiving control signals using a control plane that is a route for transmitting the control signals used for a communication service used by a terminal from among the plurality of gateways on the basis of a required condition of the communication service used by the terminal, and the gateway includes a second gateway selection unit for selecting a second serving gateway transmitting and receiving user signals using a user plane that is a route for transmitting the user signals used for the communication service, from among the plurality of gateways other than the gateway of its own self, on the basis of the required condition of the communication service used by the terminal, in a case in which the gateway of its own self is selected as a first serving gateway by the first gateway selection unit.

According to the present invention, a first serving gateway is selected on the basis of the required condition of the communication service used by the terminal, and a second serving gateway is further selected on the basis of the required condition of the service, and accordingly, a gateway can be dynamically selected in accordance with the required condition of the communication service for each plane.

### Advantageous Effects of Invention

According to the present invention, a gateway can be dynamically selected for each plane in accordance with a plurality of communication services requested by one UE.

### Brief Description of Drawings

Fig. 1 is a diagram illustrating the system configuration of a communication system according to a first embodiment of the present invention.
Fig. 2 is a diagram illustrating the data structure of information stored by an HSS 40.
Fig. 3 is a diagram illustrating the data structure of information stored by a DNS server 50.
Fig. 4 is a diagram illustrating functional blocks of some devices of a communication system according to an embodiment of the present invention.
Fig. 5 is a diagram illustrating the hardware configuration of a communication system.
Fig. 6 is a flowchart illustrating a query process performed by an MME 30.
Fig. 7 is a flowchart illustrating a process of a connection with an SGW-C 60 and an SGW-U 70.
Fig. 8 is a diagram illustrating the system configuration of a communication system according to a second embodiment of the present invention.
Fig. 9 is a diagram illustrating a table of a modified example.
Fig. 10 is a sequence diagram illustrating a query process performed by a communication control device 130.

### Description of Embodiments

Hereinafter, embodiments of the present invention will be described in detail with reference to the drawings. In description of the drawings, the same reference signs will be assigned to the same elements, and duplicate description will not be presented.

### [First embodiment]

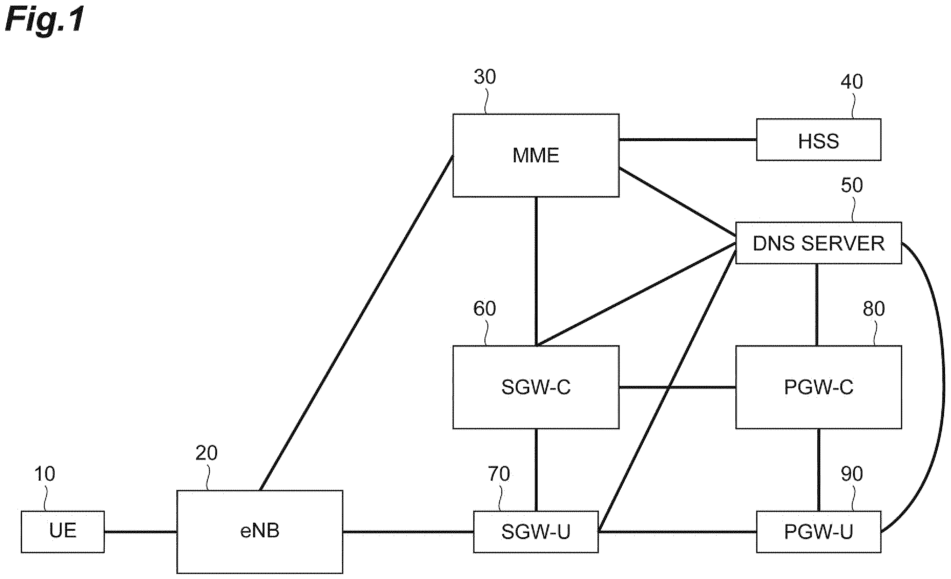

Fig. 1 is a system configuration diagram of a communication system 1 according to a first embodiment of the present invention (communication system). This communication system 1 is configured to include: a UE 10; an eNodeB (eNB) 20; a mobility management entity (MME) 30 (communication control device); an HSS 40; a DNS server 50; an SGW-C 60 (gateway; first serving gateway); an SGW-U 70 (second serving gateway); a PGW-C 80; and a PGW-U 90. The user equipment (UE) 10 (terminal) including a smartphone or a tablet terminal can perform communication by being communicatively connected to this communication system 1. In addition, the UE 10 stores information representing a plurality of communication services that can be used by its own device and transmits the information to the eNodeB 20. Here, a communication service is a service using communication and is a service such as video delivery, inter-car communication, or the like. In each service, a required network condition that is requested is different. The UE 10 stores a service type that is information representing the required network condition described above as information representing a communication service.

The eNodeB 20 is a radio base station connected to the MME 30 and is a device having a radio access control function. The eNodeB 20 has a reception control function when there is signal transmission from the UE 10 and a paging function of calling the UE 10 when a signal arrives at the UE 10 from another UE 10 as basic functions. In addition, the eNodeB 20 stores an address of the MME 30 and, when an Attach Request is received from the UE 10, requests Attach for the address.

The MME 30 is a device that is connected to the UE 10 through the eNodeB 20 when there is an Attach Request (location registration request) from the UE 10. The MME 30 is a part that performs location management and authentication control of the UE 10 located in a Long Term Evolution (LTE) network and a process of setting a communication route of control data or user data between the SGW 80 and the eNodeB 20.

In addition, the MME 30 performs a route setting process of user data for an SGW-C 60 determined in a process to be described later. In addition, the MME 30 acquires the address of the SGW-C 60 corresponding to a service type acquired from the eNodeB 20 from the DNS server 50 and is connected to the acquired address.

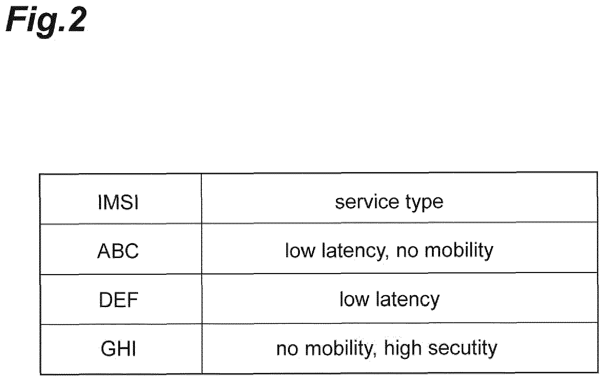

An HSS 40 is a server that manages subscriber information including contract information, authentication information, communication service information, terminal type information, and location information of a communication terminal such as the UE 10 as a database. Here, the communication service information is information that defines a type of communication service used by each UE 10. In the communication service information, information used for identifying the UE 10 (for example, International Mobile Subscriber Identity (IMSI)) and a service type representing a required condition of a communication service used by the UE 10 are included. An example of this information is illustrated in Fig. 2. As illustrated in Fig. 2, the communication service information includes an IMSI used for identifying a terminal and a service type. In the example illustrated in Fig. 2, it is represented that a user of the UE 10 of which the IMSI is "ABC" can use communication services of service types of "low latency" and "no mobility." In other words, this user can use a plurality of communication services. When a terminal ID is acquired from the MME 30, and a request for the acquisition of a service type is received, the HSS 40 transmits a service type corresponding to the terminal ID to the MME 30. In addition, the HSS 40 also includes information in which an IMSI and a UE usage type are associated with each other as terminal type information.

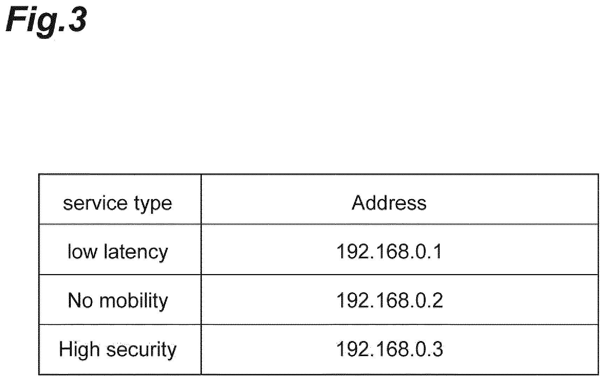

The DNS server 50 is a computer that manages a correspondence relation among a domain name, a host name, and an IP address on a network. Furthermore, the DNS server 50 stores information in which a service type and an address of the SGW-C 60 are associated with each other (SGW-C information), information in which a service type and an address of the SGW-U 70 are associated with each other (SGW-U information), and information in which a service type and an address of the PGW-C 80 are associated with each other (PGW-C information), and information in which a service type and an address of the PGW-U 90 are associated with other (PGW-U information). Here, an example of the SGW-C information is illustrated in Fig. 3. As illustrated in Fig. 3, "Service type" representing a service type and "Address" representing an address of the SGW-C 60 are stored in association with each other. In addition, each of the SGW-U information, the PGW-C information, and the PGW-U information has a data structure similar to that of the SGW-C information.

When a service type is received, and a request for the transmission of an address of the SGW-C 60 is received from the MME 30, the DNS server 50 refers to the SGW-C information and transmits a list of addresses of SGW-Cs 60 corresponding to the service type (in other words, appropriate for the service type) to the MME 30. In addition, when a service type is received, and a request for the transmission of an address of the SGW-U 70 is received from the SGW-C 60, the DNS server 50 refers to the SGW-U information and transmits a list of addresses of SGW-Us 70 corresponding to the service type to the SGW-C 60. Furthermore, when a service type is received from the MME 30, and a request for the transmission of an address of the PGW-C 80 is received, the DNS server 50 refers to the PGW-C information and transmits a list of addresses of PGW-Cs 80 corresponding to the service type to the MME 30. In addition, when a service type is received from the PGW-C 80, and a request for the transmission of an address of the PGW-U 90 is received, the DNS server 50 refers to the PGW-U information and transmits a list of addresses of PGW-Us 90 corresponding to the service type to the PGW-C 80.

In addition, the DNS server 50 regularly acquires traffic information from the SGW-C 60, the SGW-U 70, the PGW-C 80, and the PGW-U 90 and generates a list of addresses on the basis of the traffic information. For example, the DNS server 50 generates the list in order of lowest to highest load represented by the traffic information.

The SGW-C 60 is an in-service-area packet switcher accommodating LTE and, by using a control plane that is a route for transmitting a control signal used for providing a communication service used by the UE 10, transmits/receives the control signal to/from a packet data network gateway (PGW). A plurality of SGW-Cs 60 are equipped in correspondence with required conditions of a plurality of communication services.

The SGW-U 70, by using a user plane that is a route for transmitting a user signal used for providing a communication service used by the UE 10, transmits/receives the user signal to/from the PGW in the in-service-area packet switcher accommodating the LTE. A plurality of SGW-Us 70 are equipped in correspondence with required conditions of a plurality of communication services.

The PGW-C 80 is a junction with a packet data network (PDN) and is a gateway performing assignment of an IP address, transmission of a packet to the SGW-C 60, and the like. In other words, the PGW-C 80 is connected to the SGW-C 60 and transmits/receives a control signal to/from the SGW-C 60. A plurality of PGW-Cs 80 are equipped in correspondence with required conditions of a plurality of communication services.

The PGW-U 90 is a junction with the PDN and is a gateway performing assignment of an ID address, transmission of a packet to the SGW-U 70, and the like. In other words, the PGW-U 90 is connected to the SGW-U 70 and transmits/receives a user signal to/from the SGW-C 70. A plurality of PGW-Us 90 are equipped in correspondence with required conditions of a plurality of communication services.

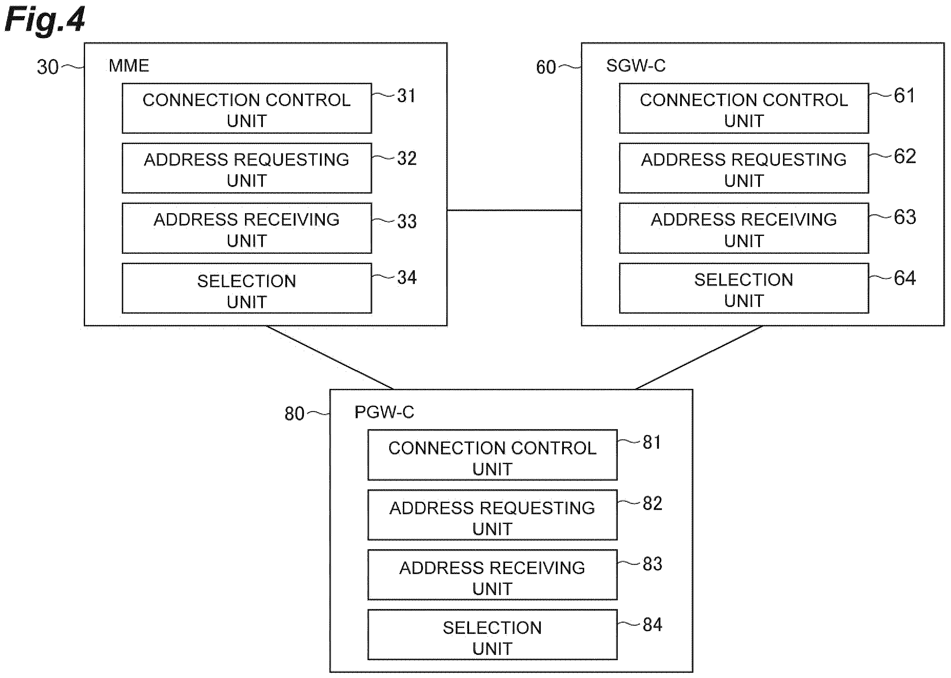

Next, the component elements of the MME 30, the SGW-C 60, and the PGW-C 80 of the communication system 1, which have features, will be described with reference to Fig. 4.

As illustrated in Fig. 4, the MME 30 includes: a connection control unit 31; an address requesting unit 32; an address receiving unit 33; and a selection unit 34 (first gateway selection unit). In addition, the SGW-C 60 is configured to include: a connection control unit 61; an address requesting unit 62; an address receiving unit 63; and a selection unit 64 (second gateway selection unit). Furthermore, the PGW-C 80 is configured to include: a connection control unit 81; an address requesting unit 82; an address receiving unit 83; and a selection unit 84.

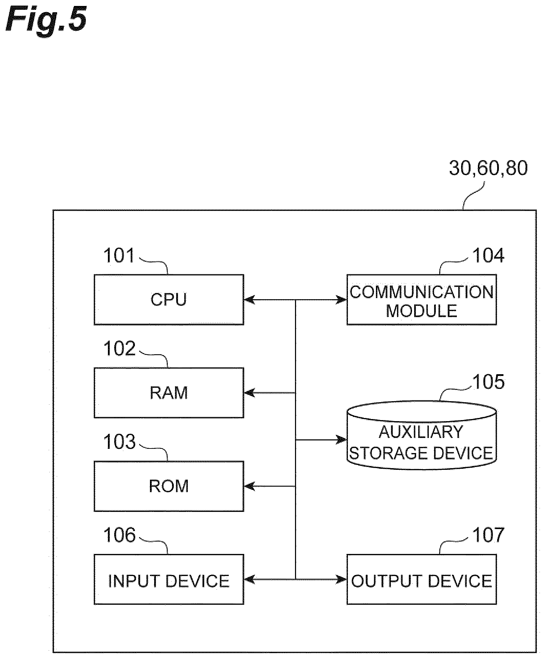

Physically, as illustrated in Fig. 5, each of the MME 30, the SGW-C 60, and the PGW-C 80 is configured as a computer system including: one or a plurality of CPUs 101; a RAM 102 and a ROM 103 that are main storage devices; a communication module 104 (a transmitter or a receiver) that is a data transmitting/receiving device; an auxiliary storage device 105 (memory) that is exemplified as a hard disk, a flash memory, or the like; an input device 106 that is exemplified as a touch panel, a keyboard, and the like that are input devices; an output device 107 such as a display; and the like. In each of the MME 30, the SGW-C 60, and the PGW-C 80, by causing predetermined computer software to be read on hardware such as the CPU 101, the RAM 102, and the like illustrated in Fig. 5, the communication module 104, the input device 106, and the output device 107 are operated under the control of the CPU 101, and, by reading/writing data from/into the RAM 102 and the auxiliary storage device 105, a series of functions in each device are realized.

In addition, instead of a processor such as the CPU 101 executing each function illustrated in Fig. 4, by building all or some of the functions using a dedicated integrated circuit (IC), each function may be configured to be executed. For example, by building a dedicated integrated circuit for performing image processing and communication control, the functions described above may be executed.

Software should be broadly interpreted to mean a command, a command set, a code, a code segment, a program code, a program, a subprogram, a software module, an application, a software application, a software package, a routine, a subroutine, an object, an executable file, an executable thread, an order, a function, and the like regardless whether it is called software, firmware, middleware, a microcode, or a hardware description language or any other name.

In addition, the software, the command, or the like may be transmitted and received through a transmission medium. For example, in a case in which software is transmitted from a web site, a server, or any other remote source using a wired technology such as a coaxial cable, an optical fiber cable, a twisted pair or a digital subscriber line (DSL) and/or a wireless technology such as an infrared ray, radio, or a microwave, such a wired technology and/or a wireless technology are included in the definition of the transmission medium.

Referring back to Fig. 4, the connection control unit 31 is a part that performs connection control for various devices. More specifically, the connection control unit 31 makes a connection request for the SGW-C 60 corresponding to the service type used by the UE 10 in response to the Attach Request of the UE 10 from the eNodeB 20. In addition, when the connection request is made for the SGW-C 60, the connection control unit 31 transmits the address of the PGW-C 80 together with the service type.

In addition, when an Attach Request is received, the connection control unit 31 receives information representing a communication service (service type) from the eNodeB 20. The connection control unit 31 transmits the acquired service type to the address requesting unit 32.

The address requesting unit 32 is a part that receives a service type from the connection control unit 31, transmits the service type to the DNS server 50, and makes a transmission request for addresses of the SGW-C 60 and the PGW-C 80.

When the transmission request described above is received, the DNS server 50 searches the address of the SGW-C 60 and the address of the PGW-C 80 corresponding to the received service type and transmits a result of the search to the MME 30.

The address receiving unit 33 is a part that receives the address of the SGW-C 60 and the PGW-C 80 from the DNS server 50. When an address is transmitted by the DNS server 50 after the address request is made by the address requesting unit 32, the address receiving unit 33 receives the address. When the address described above is received, the address receiving unit 33 transmits the address to the selection unit 34.

The selection unit 34 acquires addresses of the SGW-Cs 60 and addresses of the PGW-Cs 80 acquired from the address receiving unit 33 and selects an SGW-C 60 and a PGW-C 80 from among the acquired addresses. The selection unit 34 transmits a result of the selection to the connection control unit 31.

The connection control unit 61 is a part that performs control of connections with various devices. More specifically, the connection control unit 61 receives a connection request from the MME 30 and responds to the connection request. In addition, the connection control unit 61 requests connections for the SGW-U 70 and the PGW-C 80. In addition, the connection control unit 61 receives a bearer change request from the MME 30 and responds to the bearer change request.

In addition, when a connection request is received from the MME 30, the connection control unit 61 receives the address of the PGW-C 80 from the MME 30 and receives a service type. The connection control unit 61 transmits the received service type to the address requesting unit 62.

The address requesting unit 62 is a part that receives the service type from the connection control unit 61, transmits the service type to the DNS server 50, and makes a transmission request for transmitting the address of the SGW-U 70.

When the transmission request is received, the DNS server 50 searches the address of the SGW-U 70 corresponding to the received service type and transmits a result of the search to the SGW-C 60.

The address receiving unit 63 is a part that receives the address of the SGW-U 70 from the DNS server 50. When an address is transmitted by the DNS server 50 after the address request is performed by the address requesting unit 62, the address receiving unit 63 receives the address. When the address described above is received, the address receiving unit 63 transmits the address to the selection unit 64.

The selection unit 64 acquires the addresses of the SGW-Us 70 from the address receiving unit 63 and selects an SGW-U 70 from among the acquired addresses. The selection unit 64 transmits a result of the selection to the connection control unit 61.

The connection control unit 81 is a part that controls connections with various devices. More specifically, the connection control unit 81 receives a connection request from the SGW-C 60 and responds to the connection request. In addition, the connection control unit 81 makes a connection request for the PGW-U 90.

In addition, when a connection request from the SGW-C 60 is received, the connection control unit 81 receives a service type. The connection control unit 81 transmits the received service type to the address requesting unit 82.

The address requesting unit 82 is a part that receives the service type from the connection control unit 81, transmits the service type to the DNS server 50, and performs a transmission request for transmitting addresses of PGW-Us 90.

When the transmission request described above is received, the DNS server 50 searches addresses of PGW-Us 90 corresponding to the received service type and transmits a result of the search to the PGW-C 80.

The address receiving unit 83 is a part that receives the addresses of the PGW-Us 90 from the DNS server 50. When addresses are transmitted by the DNS server 50 after the address request is made by the address requesting unit 82, the address receiving unit 83 receives the addresses. When the addresses described above are received, the address receiving unit 83 transmits the addresses to the selection unit 84.

The selection unit 84 acquires the addresses of PGW-Us 90 acquired from the address receiving unit 83 and selects a PGW-U 90 among the acquired addresses. The selection unit 84 transmits a result of the selection to the connection control unit 81.

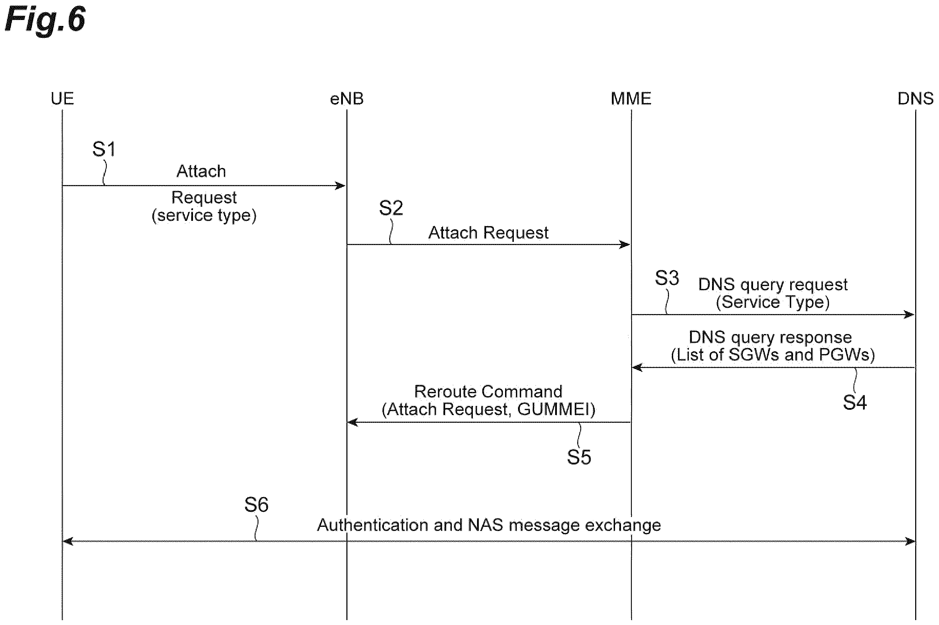

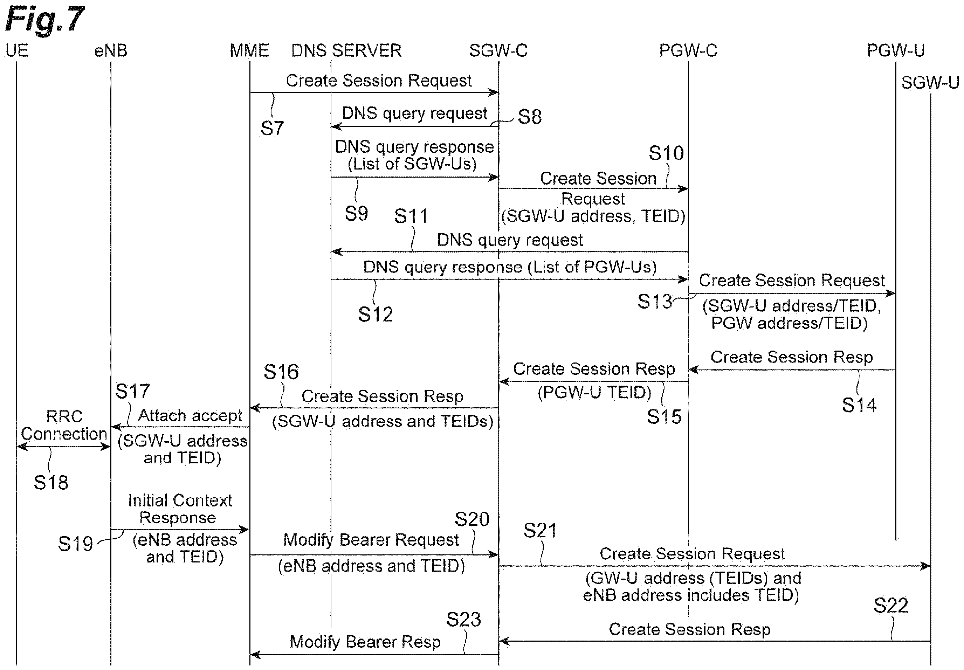

A method of selecting a communication control device in the communication system 1 described above will be described with reference to Figs. 6 and 7. Fig. 6 is a sequence diagram illustrating an Attach process of a case in which the UE 10 transmits a service type, and Fig. 7 is a sequence diagram illustrating a process of requesting a connection using the MME 30.

First, an Attach process of a case in which the UE 10 transmits a service type will be described with reference to Fig. 6.

First, the UE 10 transmits a service type stored by its own device together with an Attach Request signal to the eNodeB 20, thereby performing an Attach Request (Step S1). In addition, in a case in which a plurality of service types are stored, the UE 10 transmits the plurality of service types. The eNodeB 20 performs an Attach Request for the MME 30 using an initial UE signal in response to the Attach Request (Step S2).

Subsequently, the address requesting unit 32 transmits all the service types acquired by the connection control unit 31 to the DNS server 50 and requests the addresses of SGW-C's 60 and PGW-C's 80 (DNS query request) (Step S3). The DNS server 50 transmits lists of the addresses of the SGW-U 70 and the PGW-C 80 to the MME 30 in response to the address request (Step S4).

The MME 30 transmits a Reroute Command signal to the eNodeB 20 (Step S5). Subsequently, new authentication (re-authentication) of the UE 10 is performed between the UE 10, the eNodeB 20, the MME 30, and the HSS 40 (Step S6).

Next, a connection requesting process using the MME 30 will be described with reference to Fig. 7. First, the MME 30 selects the addresses of the SGW-C's 60 received from the DNS server 50, selects the addresses of the PGW-C's 80, transmits the addresses of the PGW-C's 80, and performs a bearer establishment request for the SGW-C 60 (Step S7: first gateway selection step, a first packet data network gateway selection step). The SGW-C 60 transmits a service type to the DNS server 50 and performs a request for transmitting a list of SGW-Us 70 (Step S8). The DNS server 50 transmits a list of SGW-Us 70 to the SGW-C 60, and the SGW-C 60 selects an address of the SGW-Us 70 from the list (Step S9: second gateway selection step). The SGW-C 60 performs a bearer establishment request for the PGW-C 80. At this time, the SGW-C 60 generates a TEID and transmits the TEID and the addresses of the SGW-Us 70 (Step S10).

The PGW-C 80 transmits a service type to the DNS server 50 and performs a request for transmitting a list of SGW-Us 70 (Step S11). The DNS server 50 transmits the list of PGW-Us 90 to the PGW-C 80 (Step S12). The PGW-C 80 determines addresses of the PGW-Us 90 from the list, determines a TEID, and transmits the addresses of the SGW-Us 70 and the PGW-Us 90 for establishing a tunnel and the TEID (Step S13: second packet data network gateway selection step). The PGW-U 90 notifies the PGW-C 80 of generation of a tunnel (Step S14). The PGW-C 80 notifies the SGW-C 60 of the generation of the tunnel and transmits the TEID of the PGW-U 90 (Step S15). The SGW-C 60 notifies the MME 30 and the eNodeB 20 of an address of the SGW-U 70 to be connected and a TEID (Step S16 and Step S17). The eNodeB 20 establishes a bearer with the UE 10 (Step S18). An address of the eNodeB 20 and a TEID for establishing a tunnel are determined and are transmitted to the SGW-U 70 through the MME 30 (Step S19 and Step S20). Subsequently, a tunnel is established between the SGW-U 70 and the eNodeB 20, and establishment of a tunnel between the PGW-U 90 and the eNodeB 20 is requested by transmitting the addresses of the eNodeB 20 and the SGW-U 70 and the TEID to the PGW-U 90 (Step S21). Subsequently, the establishment is notified from the SGW-U 70 to the MME 30 through the SGW-C 60 (Step S22 and Step S23).

According to the communication system 1 of the embodiment described above, the SGW-C 60 is selected on the basis of the required condition of a communication service used by the UE 10, and the SGW-U 70 is selected on the basis of the required condition of the service described above, whereby a gateway can be dynamically selected in accordance with the required condition of the communication service for each plane.

In addition, an SGW-C 60 is selected on the basis of information associating a required condition of a communication service and an SGW-C 60 that is appropriate for the communication service with each other, an SGW-C 60 is selected on the basis of information associating a required condition of a communication service and an SGW-C 60 that is appropriate for the communication service, an SGW-U 70 is selected on the basis of information associating a required condition of a communication service and an SGW-U 70 that is appropriate for the communication service, and an SGW-U 70 is selected on the basis of information associating a required condition of a communication service and an SGW-U 70 that is appropriate for the communication service, whereby an SGW-U 70 that is appropriate for the required condition of the communication service can be selected.

In addition, a PGW-C 80 is selected on the basis of a required condition of a communication service used by the terminal, and a PGW-U 90 is further selected on the basis of the required condition of the service, whereby a gateway can be dynamically selected in accordance with the required condition of the communication service for each plane.

### [Second embodiment]

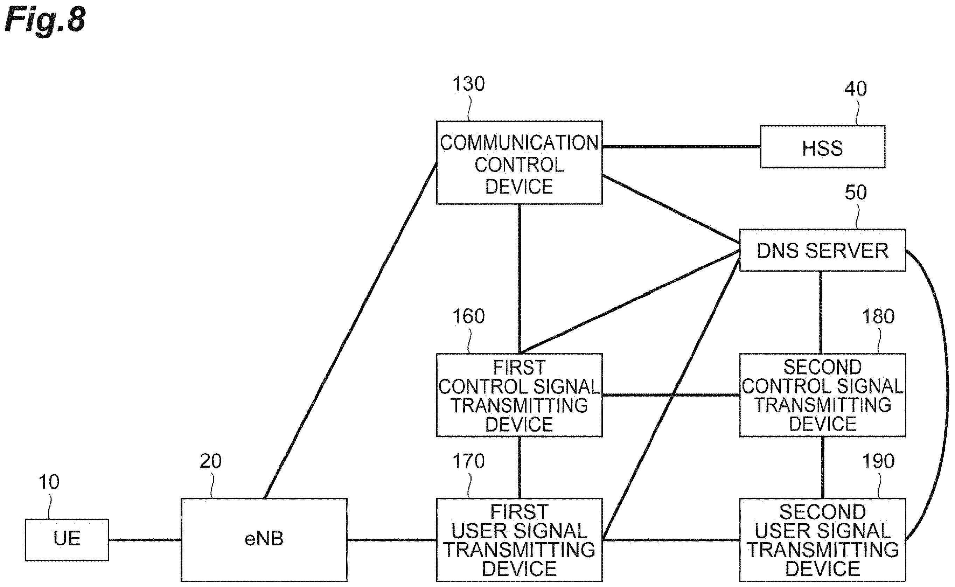

In the first embodiment described above, a case has been described in which the MME 30 selects an SGW-C 60 on the basis of a required condition of a communication service used by the UE 10, and the selected SGW-C 60 selects an SGW-U 70 on the basis of the required condition of the service. In this embodiment, a communication control device (common CP-functionalities) 130 corresponding to a MME 30, which is illustrated in the system configuration diagram of a communication system illustrated in Fig. 8, selects a first control signal transmitting device 160 corresponding to the SGW-C 60. Here, the control signal transmitting device (CP-functionalities) is a node that transmits or receives a control signal using a control plane that is a route through which the control signal used for providing a communication service used by a UE 10 is transmitted. A first control signal transmitting device 160 selected by the MME 30 selects a first user signal transmitting device 170 corresponding to the SGW-U 70. Here, the user signal transmitting device (UP-functionalities) is a node that transmits or receives a user signal using a user plane that is a route through which the user signal used for providing a communication service used by the UE 10 is transmitted. In addition, the communication control device 130 selects a second control signal transmitting device 180 corresponding to the PGW-C 80. Furthermore, the selected second control signal transmitting device 180 selects a second user signal transmitting device 190 corresponding to the PGW-U 90.

The communication control device 130 has functions corresponding to the connection control unit 31, the address requesting unit 32, the address receiving unit 33, and the selection unit 34 illustrated in Fig. 4. In addition, the communication control device 130 has, for example, an authentication function for a user and a UE 10 and a mobility management function. Furthermore, the first control signal transmitting device 160 has functions corresponding to the connection control unit 61, the address requesting unit 62, the address receiving unit 63, and the selection unit 64. In addition, the second control signal transmitting device 180 has functions corresponding to the connection control unit 81, the address requesting unit 82, the address receiving unit 83, and the selection unit 84.

The communication control device 130, the first control signal transmitting device 160, the first user signal transmitting device 170, the second control signal transmitting device 180, and the second user signal transmitting device 190 described above perform processes similar to those of the MME 30, the SGW-C 60, the SGW-U 70, the PGW-C 80, and the PGW-U 90 in the sequence diagrams illustrated in Figs. 6 and 7.

More specifically, the communication control device 130 receives a service type used by a UE 10 and receives a list of first control signal transmitting devices 160 and second control signal transmitting devices 180 corresponding to the service type from the DNS server 50. The communication control device 130 selects a first control signal transmitting device 160 and a second control signal transmitting device 180 from the list and makes a bearer establishment request for the first control signal transmitting device 160 and the second control signal transmitting device 180. The selected first control signal transmitting device 160 acquires a list of first user signal transmitting devices 170 corresponding to the service type used by the UE 10 from the DNS server 50, selects a first user signal transmitting device 170 from the list, and makes a session request for the selected first user signal transmitting device 170. In addition, the selected second control signal transmitting device 180 acquires a list of second user signal transmitting devices 190 corresponding to the service type used by the UE 10 from the DNS server 50, selects a second user signal transmitting device 190 from the list, and makes a session request for the selected second user signal transmitting device 190.

According to the second embodiment described above, the communication control device 130 selects control signal transmitting devices (first control signal transmitting devices 160 and second control signal transmitting devices 180) on the basis of a service type used by a UE 10 and further selects user signal transmitting devices (a first user signal transmitting devices 170 and a second user signal transmitting device 190) on the basis of the service type, whereby a control signal transmitting device and a user signal transmitting device can be dynamically selected in accordance with a service type for each plane.

### [Modified Example]

In the embodiment described above, although a case in which the MME 30 receives a service type and transmits the service type to the DNS server 50 to request addresses of the SGW-C 60 and the PGW-C 80 has been described, the MME 30 may transmit information representing a service other than the service type to the DNS server 50 to request addresses of the SGW-C 60 and the PGW-C 80. In other words, an SGW-C 60 and a PGW-C 80 may be selected by using information representing a service other than the service type.

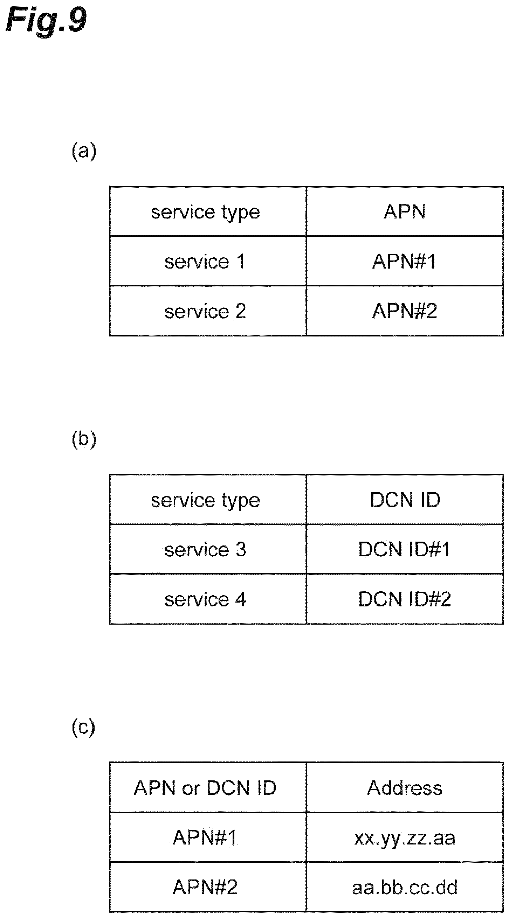

For example, a table (APN table) in which a service type and an access point name (APN) are associated with each other as illustrated in Fig. 9(a) or a table (DCN table) in which a service type and a dedicated core network (DCN) ID are associated with each other as illustrated in Fig. 9(b) is stored by the MME 30. In other words, an APN or a DCN ID is associated with each service type. In addition, the DNS server 50 stores a table in which an APN or a DCN ID and an address of the SGW-C 60 are associated with each other as illustrated in Fig. 9(c). Furthermore, a table in which an APN or a DCN ID and an address of a PGW-C 80 are associated with each other, a table in which an APN or a DCN ID and an address of an SGW-U 70 are associated with each other, and a table in which an APN or a DCN ID and an address of a PGW-U90 are stored by the DNS server 50 as well. Such tables have a table structure similar to that illustrated in Fig. 9(c).

In this case, when a service type is received, the MME 30 searches the APN table or the DCN table and acquires an APN or a DCN ID (information representing a service) corresponding to the service type. The MME 30 transmits the APN or the DCN ID that has been acquired to the DNS server 50 and requests the addresses of the SGW-C 60 and the PGW-C 80. The DNS server 50 searches the SGW-C table and the PGW-C table to acquire an address corresponding to the APN or the DCN ID that has been received and transmits the acquired address to the MME 30.

The MME 30 transmits the APN or the DCN ID that has been acquired to the SGW-C 60 corresponding to the received address. The SGW-C 60 transmits the APN or the DCN ID that has been acquired to the DNS server 50 and requests an address of the SGW-U 70.

In addition, the communication control device 130, as in the example described above, may store the APN table or the DCN table and transmit an APN or a DCN ID corresponding to the received service type to the DNS server 50 to request an address.

In addition, the APN or the DCN ID described above is not limited to be used, and other information (for example, a UE usage type) representing a service and another information element maintained by a core network may be used. In addition, not only one type of information, but information representing a plurality of combined services may be used. For example, instead of the DCN ID, an ID (client ID) representing an organization, a company, or the like to which a user using the UE 10 belongs may be used. In addition, a connection destination may be uniquely determined on the basis of the client ID and a service type. Furthermore, a domain name network (DNN) that is a name representing an address may be used instead of the APN.

In addition, in the embodiment described above, although a case in which the MME 30 receives a service type from the UE 10 has been described, the service type may be acquired from another device (for example, the HSS 40). For example, the HSS 40 is assumed to store information (for example, an IMSI) used for identifying a UE 10 and a service type in association with each other, and the MME 30 may receive an IMSI from the UE10, transmit the IMSI to the HSS 40, and acquire a service type corresponding to the IMSI.

In addition, in the embodiment described above, a case has been described in which the communication control device 130 selects control signal transmitting devices (a first control signal transmitting device 160 and a second control signal transmitting device 180) on the basis of a service type used by the UE 10, and the selected control signal transmitting device selects user signal transmitting devices (a first user signal transmitting device 170 and a second user signal transmitting device 190) on the basis of the service type. Instead of this, the communication control device 130 may not only select a control signal transmitting device on the basis of a service type used by the UE 10 but also select a user signal transmitting device on the basis of the service type. Also in this case, the control signal transmitting device and the user signal transmitting device are selected on the basis of a communication service used by the UE 10, and accordingly, a control signal transmitting device and a user signal transmitting device can be dynamically selected in accordance with a communication service for each plane.

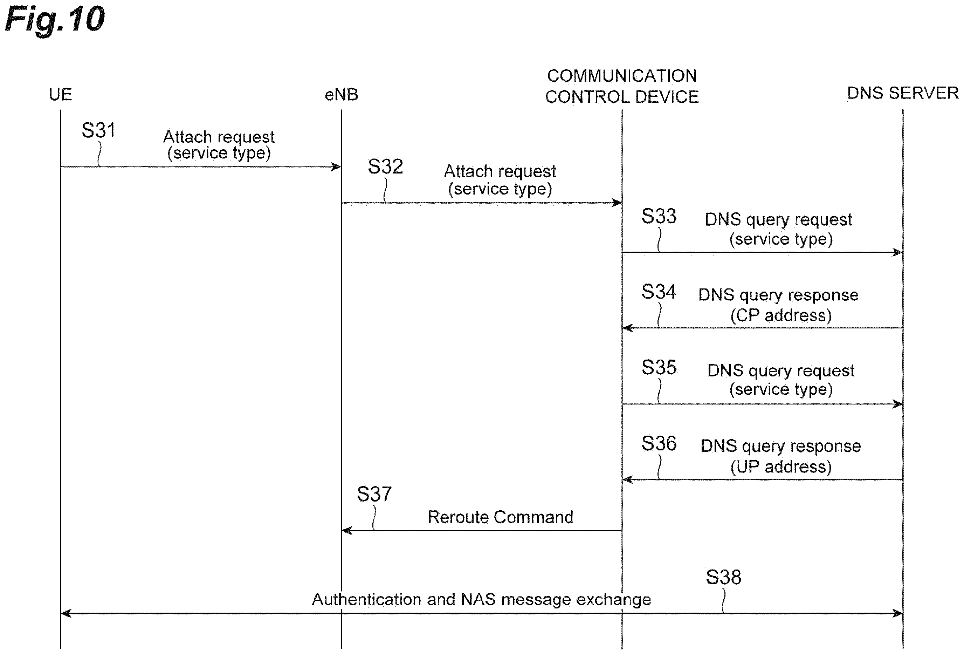

Here, a process of selecting a control signal transmitting device and a user signal transmitting device on the basis of a service type used by the UE 10 in an Attach process of a case in which the UE 10 transmits the service type will be described with reference to Fig. 10.

First, processes of Steps S31 and S32 are similar to the processes of Steps S1 and S2 illustrated in Fig. 6, and thus description thereof will not be presented.

Subsequently, the communication control device 130 transmits all the service types acquired from the UE 10 to the DNS server 50 and requests addresses (DNS query request) of the first control signal transmitting device 160 and the second control signal transmitting device 180 (Step S33). The DNS server 50 transmits a list of the addresses of the first control signal transmitting device 160 and the second control signal transmitting device 180 to the communication control device 130 in response to the address request (Step S34). In addition, the communication control device 130 transmits all the service types acquired from the UE 10 to the DNS server 50 and requests addresses (DNS query request) of the first user signal transmitting device 170 and the second user signal transmitting device 190 (Step S35). In response to the address request, the DNS server 50 transmits a list of the addresses of the first user signal transmitting device 170 and the second user signal transmitting device 190 to the communication control device 130 (Step S36). In addition, the communication control device 130 may transmit all the service types acquired from the UE 10 to the DNS server 50 and request the addresses of the first control signal transmitting device 160, the second control signal transmitting device 180, the first user signal transmitting device 170, and the second user signal transmitting device 190 altogether.

The communication control device 130 transmits a Reroute Command signal to the eNodeB 20 (Step S37). Subsequently, new authentication (re-authentication) of the UE 10 is performed between the UE 10, the eNodeB 20, the communication control device 130, and the HSS 40 (Step S38).

In addition, the communication control device 130 selects a first control signal transmitting device 160 and a second control signal transmitting device 180 from the list acquired from the DNS server 50 and selects a first user signal transmitting device 170 and a second user signal transmitting device 190. The communication control device 130 transmits the addresses of the second control signal transmitting device 180, the first user signal transmitting device 170, and the second user signal transmitting device 190 that have been selected to the selected first control signal transmitting device 160 and makes a session request therefor.

Instead of the eNodeB 20 described in the embodiment described above, a radio access network (RAN) may be applied. In such a case, instead of the communication control device 130, the RAN may select a first control signal transmitting device 160 and a second control signal transmitting device 180 using information (for example, a service type) acquired from the UE 10 and another information element maintained by the core network. In other words, the RAN may include a control signal transmitting device selection unit.

In addition, "information" described in this specification may be represented using any one of various other technologies. For example, data, instructions, commands, information, signals, bits, symbols, chips, and the like mentioned over the whole description presented above may be represented using a voltage, a current, an electromagnetic wave, a magnetic field or a magnetic particle, an optical field or a photon, or an arbitrary combination thereof.

Description of "on the basis of" used in this specification does not mean "only on the basis of' unless otherwise mentioned. In other words, description of "on the basis of" means both "only on the basis of" and "at least on the basis of".

The processing order, the sequence, the flowchart, and the like of each aspect/embodiment described in this specification may be changed in order as long as there is no contradiction. For example, in the method described in this specification, elements of various steps are presented in an exemplary order, and the order is not limited to the presented specific order.

Aspects/embodiments described in this specification may be used independently, be used in combination, or be used to be switched in accordance with the execution. In addition, a notification (for example, a notification of "being X") of predetermined information is not limited to be performed explicitly and may be performed implicitly (for example, a notification of predetermined information is not performed).

As above, while the present invention has been described in detail, it is apparent to a person skilled in the art that the present invention is not limited to the embodiments described in this specification. The present invention may be modified or changed without departing from the concept and the scope of the present invention set in accordance with the claims. Thus, the description presented in this specification is for the purpose of exemplary description and does not have any limitative meaning for the present invention.

Any referring to elements using names such as "first," "second," and the like used in this specification does not limit the amounts or the order of such elements as a whole. Rather, such names may be used in this specification as a convenient method for distinguishing two or more elements from each other. Thus, referring to first and second elements does not mean that only two elements are employed, or the first element precedes the second element in a certain form.

In addition, terms described in this specification and/or terms that are necessary for understanding this specification may be substituted with terms having the same or similar meanings.

Terms "system" and "network" used in this specification are used compatibly.

In addition, information, a parameter, and the like described in this specification may be represented using absolute values, relative values from predetermined values, or any other information corresponding thereto. For example, a radio resource may be directed using an index.

In addition, "means" in the configuration of each device may be substituted with "unit," "circuit," "device," or the like.

As long as "include," "including," and a variation thereof are used in this specification or the claims, such terms are intended to be understood as being inclusive like a term "comprise." In addition, a term "or" used in this specification or the claims is intended not to be exclusive OR.

In this specification, in a case other than a case in which clearly only one device is present in the context or from a technical viewpoint, a plurality of devices are assumed to be included as well.

In addition, each aspect/embodiment described in this specification may be applied to systems using Long Term Evolution (LTE), LTE-Advanced (LTE-A), SUPER 3G, IMT-Advanced, 4G, 5G, Future Radio Access (FRA), W-CDMA (registered trademark), GSM (registered trademark), CDMA 2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), and other appropriate systems and/or next-generation systems expanded based on these.

Input/output information and the like may be stored in a specific place (for example, a memory) or managed using a management table. The input/output information and the like may be rewritten, updated, or additionally stored. The output information and the like may be deleted. The input information and the like may be deleted. The input information and the like may be transmitted to another device.

In the whole present disclosure, unless a unit is clearly mentioned as being single, one or a plurality thereof are assumed to be included.

### Reference Signs List

1: communication system; 10: UE (terminal); 20: eNodeB (eNB); 30: MME; 31: connection control unit; 32: address requesting unit; 33: address receiving unit; 34: selection unit; 40: HSS; 50: DNS server; 60: SGW-C; 61: connection control unit; 62: address requesting unit; 63: address receiving unit; 64: selection unit; 70: SGW-U; 80: PGW-C; 90: PGW-U.

## Claims

1. A transmission device selection method for selecting a control signal transmitting device and a user signal transmitting device in a communication system including: a communication control device; a plurality of control signal transmitting devices transmitting and receiving control signals using a control plane that is a route for transmitting the control signals used for a communication service used by a terminal; and a plurality of user signal transmitting devices transmitting and receiving user signals using a user plane that is a route for transmitting the user signals used for the communication service,
the transmission device selection method comprising a transmission device selection step of selecting a control signal transmitting device and a user signal transmitting device on the basis of the communication service used by the terminal.

2. A communication system comprising:
a communication control device;
a plurality of control signal transmitting devices transmitting and receiving control signals using a control plane that is a route for transmitting the control signals used for a communication service used by a terminal; and
a plurality of user signal transmitting devices transmitting and receiving user signals using a user plane that is a route for transmitting the user signals used for the communication service,
wherein the communication control device includes a transmission device selection unit for selecting a control signal transmitting device and a user signal transmitting device on the basis of the communication service used by the terminal.

3. A transmission device selection method for selecting a control signal transmitting device and a user signal transmitting device in a communication system including: a communication control device; a plurality of control signal transmitting devices transmitting and receiving control signals using a control plane that is a route for transmitting the control signals used for a communication service used by a terminal; and a plurality of user signal transmitting devices transmitting and receiving user signals using a user plane that is a route for transmitting the user signals used for the communication service,
the transmission device selection method comprising:
a control signal transmitting device selection step of selecting, by the communication control device, a control signal transmitting device on the basis of the communication service used by the terminal; and
a user signal transmitting device selection step of selecting, on the basis of the communication service used by the terminal, a user signal transmitting device by the control signal transmitting device selected in the control signal transmitting device selection step.

4. A communication system comprising:
a communication control device;
a plurality of control signal transmitting devices transmitting and receiving control signals using a control plane that is a route for transmitting the control signals used for a communication service used by a terminal; and
a plurality of user signal transmitting devices transmitting and receiving user signals using a user plane that is a route for transmitting the user signals used for the communication service,
wherein the communication control device includes a control signal transmitting device selection unit for selecting a control signal transmitting device from among the plurality of control signal transmitting devices on the basis of the communication service used by the terminal, and
wherein the control signal transmitting device includes a user signal transmitting device selection unit for selecting a user signal transmitting device on the basis of the communication service used by the terminal, from among the plurality of control signal transmitting devices other than the control signal transmitting device of its own self, in a case in which the control signal transmitting device of its own self is selected by the control signal transmitting device selection unit.

5. A gateway selection method for selecting a gateway in a communication system including a communication control device and a plurality of gateways, the gateway selection method comprising:
a first gateway selection step of selecting, by the communication control device, a first serving gateway transmitting and receiving control signals using a control plane that is a route for transmitting the control signals used for a communication service used by a terminal, on the basis of the communication service used by the terminal; and
a second gateway selection step of selecting, on the basis of the communication service used by the terminal, a second serving gateway transmitting and receiving user signals using a user plane that is a route for transmitting the user signals used for the communication service, by the first serving gateway selected in the first gateway selection step.

6. The gateway selection method according to claim 5, wherein, in the first gateway selection step, the communication control device selects the first serving gateway on the basis of information associating the communication service used by the terminal and the first serving gateway that is appropriate for the communication service with each other, and
wherein, in the second gateway selection step, the selected first serving gateway selects the second serving gateway on the basis of information associating the communication service used by the terminal and the second serving gateway that is appropriate for the communication service with each other.

7. The gateway selection method according to claim 5 or 6, further comprising:
a first packet data network gateway selection step of selecting, by the communication control device, a first packet data network gateway connected to the first serving gateway selected in the first gateway selection step and transmitting/receiving control signals to/from the first serving gateway on the basis of the communication service used by the terminal; and
a second packet data network gateway selection step of selecting, on the basis of the communication service used by the terminal, a second packet data network gateway connected to the first packet data network gateway selected in the first packet data network gateway selection step and transmitting/receiving the user signals, by the first packet data network gateway selected in the first packet data network gateway selection step.

8. A communication system comprising:
a communication control device; and
a plurality of gateways,
wherein the communication control device includes a first gateway selection unit for selecting a first serving gateway transmitting and receiving control signals using a control plane that is a route for transmitting the control signals used for a communication service used by a terminal, from among the plurality of gateways, on the basis of the communication service used by the terminal, and
wherein the gateway includes a second gateway selection unit for selecting a second serving gateway transmitting and receiving user signals using a user plane that is a route for transmitting the user signals used for the communication service from among the plurality of gateways other than the gateway of its own self, on the basis of the communication service used by the terminal, in a case in which the gateway of its own self is selected as the first serving gateway by the first gateway selection unit.

9. A transmission device selection method for selecting a control signal transmitting device and a user signal transmitting device in a communication system including: a communication control device; a plurality of control signal transmitting devices transmitting and receiving control signals using a control plane that is a route for transmitting the control signals used for a communication service used by a terminal; and a plurality of user signal transmitting devices transmitting and receiving user signals using a user plane that is a route for transmitting the user signals used for the communication service, the transmission device selection method comprising:
a control signal transmitting device selection step of selecting, by the communication control device, a control signal transmitting device on the basis of a required condition of the communication service used by the terminal; and
a user signal transmitting device selection step of selecting, on the basis of the required condition of the communication service used by the terminal, a user signal transmitting device by the control signal transmitting device selected in the control signal transmitting device selection step.

10. A communication system comprising:
a communication control device;
a plurality of control signal transmitting devices transmitting and receiving control signals using a control plane that is a route for transmitting the control signals used for a communication service used by a terminal; and
a plurality of user signal transmitting devices transmitting and receiving user signals using a user plane that is a route for transmitting the user signals used for the communication service,
wherein the communication control device includes a control signal transmitting device selection unit for selecting a control signal transmitting device from among the plurality of control signal transmitting devices on the basis of a required condition of the communication service used by the terminal, and
wherein the control signal transmitting device includes a user signal transmitting device selection unit for selecting a user signal transmitting device from among the plurality of control signal transmitting devices other than the control signal transmitting device of its own self, on the basis of the required condition of the communication service used by the terminal, in a case in which the control signal transmitting device of its own self is selected by the control signal transmitting device selection unit.

11. A gateway selection method for selecting a gateway in a communication system including a communication control device and a plurality of gateways, the gateway selection method comprising:
a first gateway selection step of selecting, by the communication control device, a first serving gateway transmitting and receiving control signals using a control plane that is a route for transmitting the control signals used for a communication service used by a terminal, on the basis of a required condition of the communication service used by the terminal; and
a second gateway selection step of selecting, on the basis of the required condition of the communication service used by the terminal, a second serving gateway transmitting and receiving user signals using a user plane that is a route for transmitting the user signals used for the communication service, by the first serving gateway selected in the first gateway selection step.

12. A communication system comprising:
a communication control device; and
a plurality of gateways,
wherein the communication control device includes a first gateway selection unit for selecting a first serving gateway transmitting and receiving control signals using a control plane that is a route for transmitting the control signals used for a communication service used by a terminal, from among the plurality of gateways, on the basis of a required condition of the communication service used by the terminal; and
wherein the gateway includes a second gateway selection unit for selecting a second serving gateway transmitting and receiving user signals using a user plane that is a route for transmitting the user signals used for the communication service from among the plurality of gateways other than the gateway of its own self, on the basis of the required condition of the communication service used by the terminal, in a case in which the gateway of its own self is selected as a first serving gateway by the first gateway selection unit.
